# EUROPEAN PATENT SPECIFICATION

(11) **EP 2 509 135 B1**
(45) Date of publication and mention of the grant of the patent: **13.05.2015**
(21) Application number: 12162260.9
(22) Date of filing: 29.03.2012
(51) Int. Cl.: H01M 2/10, H01M 2/20

(54) **Rechargeable battery with improved durability against external shock and vibration**
Wiederaufladbare Batterie mit verbesserter Beständigkeit gegen externen Stössen und Vibrationen
Batterie rechargeable possédant une résistance améliorée aux chocs et aux vitrations

(30) Priority: 04.04.2011 KR 20110030632
(43) Date of publication of application: 10.10.2012
(73) Proprietor: Samsung SDI Co., Ltd., Gyeonggi-do (KR); Robert Bosch GmbH, 70442 Stuttgart (DE)
(72) Inventor: Kim, Dukjung, Gyeonggi-do (KR)
(74) Representative: Mounteney, Simon James

(56) References cited:
- WO-A1-2009/136240
- GB-A- 2 297 645
- JP-A- 2011 034 730

## Description

### BACKGROUND

### 1. Field

Embodiments relate to a battery pack.

### 2. Description of the Related Art

Hybrid or electric vehicles, which use an interaction between an engine and a motor, may include a secondary battery as a power device. For example, lithium ion secondary batteries, which are non-aqueous secondary batteries having high output and high energy density, are often used as power sources of electric vehicles.

Such a secondary battery typically include: a case; an electrode assembly including a positive electrode plate, a separator, and a negative electrode plate; a positive terminal connected to the positive electrode plate; a negative terminal connected to the negative electrode plate; and a cap plate coupled to the case to receive electrolyte and the electrode assembly and fixing the positive terminal and the negative terminal. The cap plate may include a safety vent that ruptures and emits gas when a large amount of gas is generated during the charging or discharging of the battery.

Such secondary batteries may be arranged in parallel, and may be connected to one another in parallel or in series to form a battery pack for generating high electric power.
WO 2009/136240 discloses a cell holding device having top and bottom cover members, wherein the end portions of the holding device include insertion cavities for receiving ends of cells and engaging members which are disposed in the insertion cavity such that the engaging members are movable in a direction of insertion. The engaging members are formed of a flexible material such as polyethylene, polypropylene, PFA and PTFE.
GB 2 297 645 discloses a battery housing including coil springs at opposed ends of each battery containing aperture for acting as the contacts for the battery terminals.

### SUMMARY

An aspect of the present invention provides a battery pack, in which the top and bottom surfaces of secondary batteries are coupled to flat first and second cover members, thereby ensuring the flatness, durability and assembly quality of the secondary batteries.

Another aspect of the present invention provides a battery pack that includes elastic members between a cover member and the top surfaces of secondary batteries, and between the other cover member and the bottom surfaces of the secondary batteries, to absorb vibration, thereby improving the durability of the battery pack against external shock and vibration.

Accordingly the invention provides a battery pack as defined in claim 1. The first elastic member may be elastically compressible in a direction between the first cover member and the first surface of the secondary batteries. In some embodiments, the first elastic member may be a single integral member for all or some of the secondary batteries. In other embodiments, a separate first elastic member may be provided for each of the secondary batteries.

The first cover member may include: a first horizontal part having a plurality discharge holes; and a first sidewall part extending in a first direction extending from an edge of the first horizontal part to a second surface that is opposite to the first surface. The first horizontal part may include a positioning recess that is coupled to the first elastic member. The first elastic member may include a coil spring. The first horizontal part may include a first vertical part that protrudes in the first direction such that the first vertical part is fitted between the secondary batteries. The first vertical part may be disposed at a lower position than the first sidewall part. The secondary batteries may have at least one coupling recess in the first surface. The first elastic member may be fitted in the coupling recess.

The second cover member may have a through hole through which the collecting terminal passes, and the second surface is opposite to the first surface. The second elastic member may be elastically compressible in a direction between the second cover member and the second surface of the secondary batteries. In some embodiments, the second elastic member may be a single integral member for all or some of the secondary batteries. In other embodiments, a separate second elastic member may be provided for each of the secondary batteries.

Collecting terminals of neighboring ones of the secondary batteries may be electrically connected to each other through a bus bar. The bus bar may be disposed between the second surface of the secondary batteries and the second elastic member.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:
FIG. 1 is an exploded perspective view illustrating a battery pack according to an embodiment;
FIG. 2A is a front view illustrating a secondary battery of a battery pack according to an embodiment;
FIG. 2B is a side view illustrating the secondary battery of FIG. 2A;
FIG. 2C is a plan view of the secondary battery of FIG. 2A.
FIG. 3 is a perspective view illustrating a first cover member of a battery pack according to an embodiment;
FIG. 4 is a perspective view illustrating a second cover member of a battery pack according to an embodiment;
FIG. 5A is a perspective view illustrating a battery pack according to an embodiment;
FIG. 5B Is a side view illustrating the battery pack of FIG. 5A;
FIGS. 6A through 6C are perspective views illustrating a process of assembling a battery pack as a secondary battery module according to an embodiment; and
FIG. 7 is an exploded perspective view illustrating a battery pack according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

Hereinafter, embodiments will be described in detail with reference to the accompanying drawings.

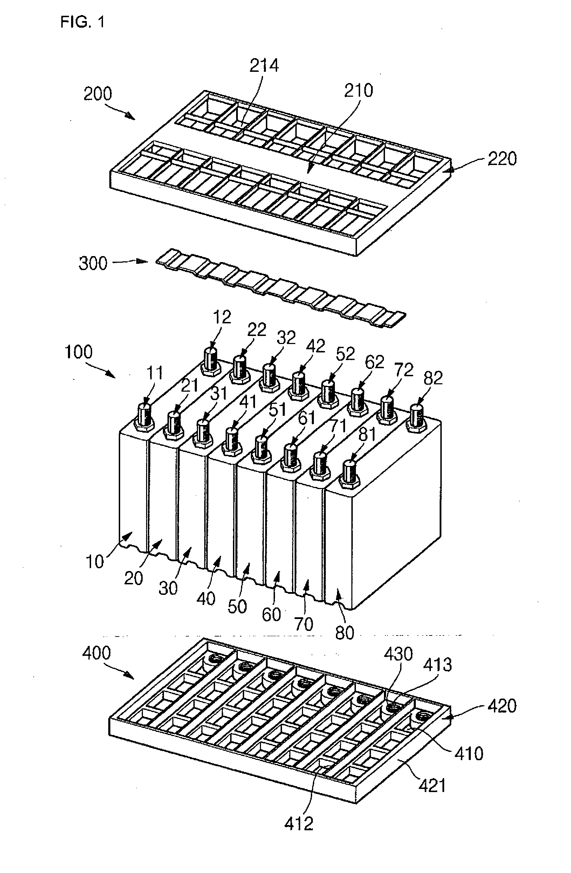

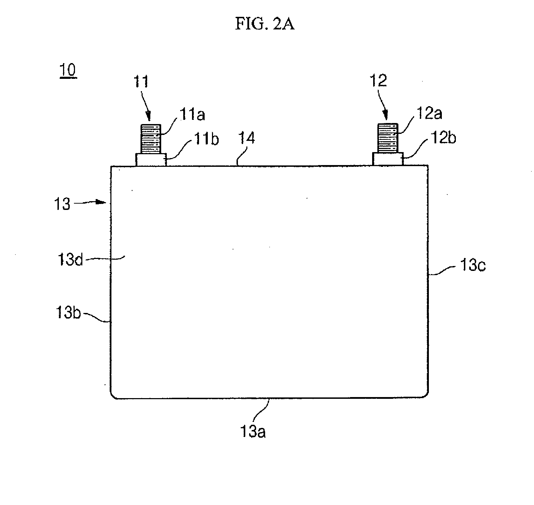

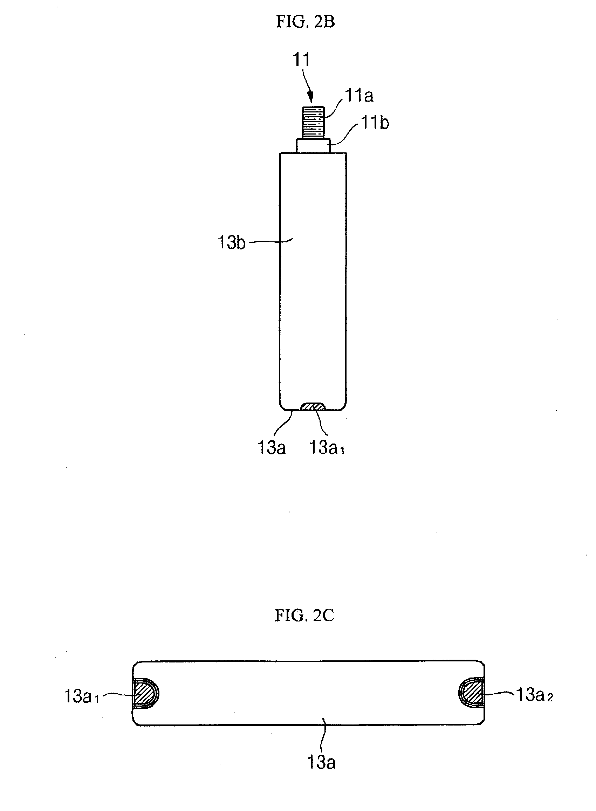

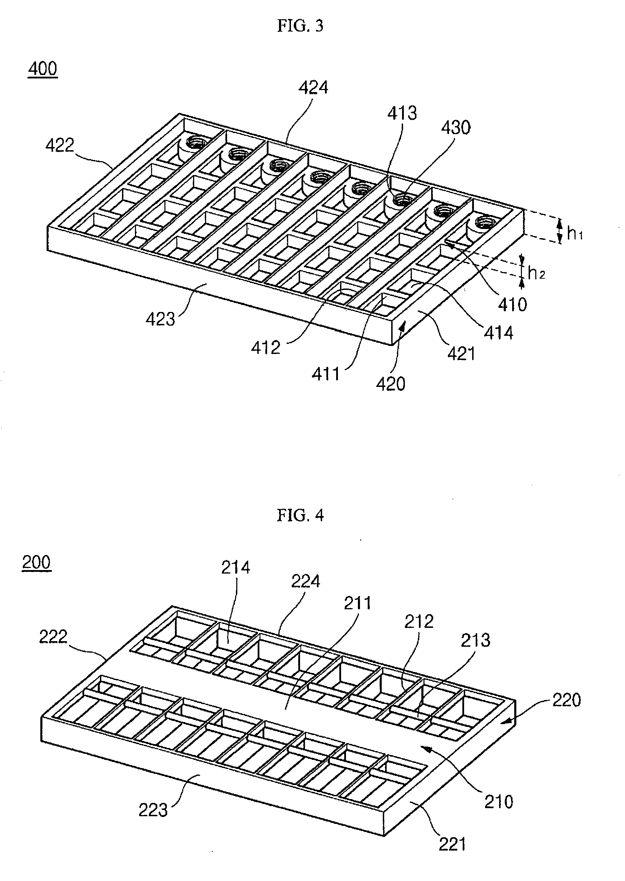

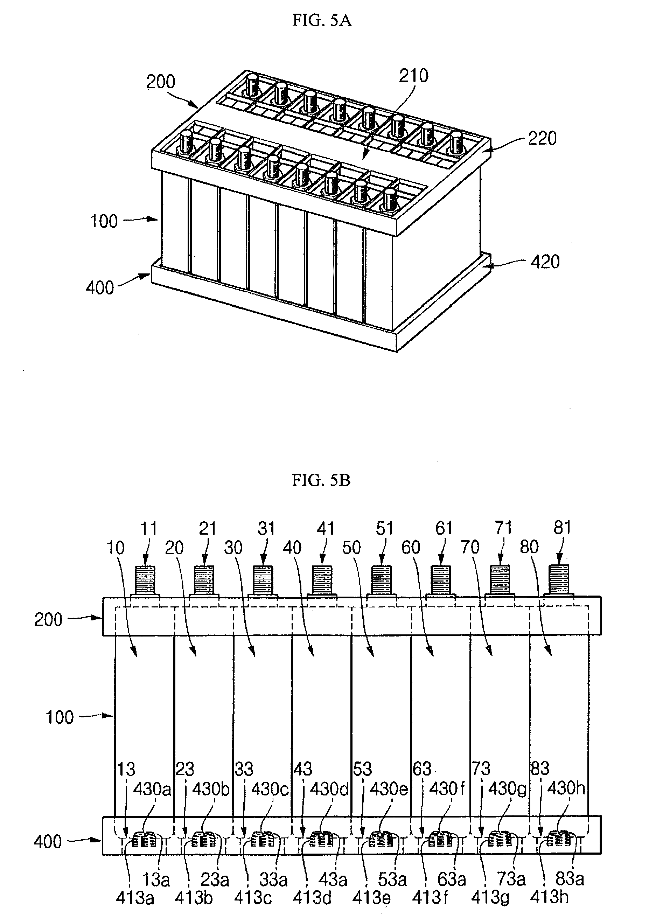

FIG. 1 is an exploded perspective view illustrating a battery pack according to an embodiment. FIG. 2A is a front view illustrating a secondary battery constituting a battery pack according to an embodiment. FIG. 2B is a side view illustrating a secondary battery constituting a battery pack according to an embodiment. FIG. 2C is a bottom view illustrating a secondary battery constituting a battery pack according to an embodiment. FIG. 3 is a perspective view illustrating a first cover member of a battery pack according to an embodiment. FIG. 4 is a perspective view illustrating a second cover member of a battery pack according to an embodiment. FIG. 5A is a perspective view illustrating a battery pack according to an embodiment. FIG. 5B is a side view illustrating a battery pack according to an embodiment.

Referring to FIGS. 1 and 5B, a battery pack according to an embodiment includes a secondary battery module 100, a first cover member 400, and a second cover member 200.

The secondary battery module 100 includes a plurality of secondary batteries 10, 20, 30, 40, 50, 60, 70, and 80, which are parallel and electrically connected to one another. There are eight secondary batteries 10, 20, 30, 40, 50, 60, 70, and 80 in the current embodiment, but embodiments of the present invention are not limited thereto.

Referring to FIGS. 2A to 2C, the secondary battery 10 includes an electrode assembly, a case 13, a cap plate 14, and collecting terminals 11 and 12.

The electrode assembly may include a positive electrode plate, a separator, and a negative electrode plate. The positive electrode plate, the separator, and the negative electrode plate may be wound at a plurality of times in an approximately oval shape about a winding axis.

The case 13 has an approximately hexahedron shape provided with an opening through which the electrode assembly, a positive terminal (also denoted by 11), and a negative terminal (also denoted by 12) are inserted and placed. The case 13 may be formed of one of aluminum (Al), copper (Cu), iron (Fe), stainless steel (SUS), a ceramic, a polymer material, and an equivalent thereof, but embodiments of the present invention are not limited thereto. The case 13 includes a first surface 13a that may include one or more coupling recesses 13a₁ and 13a₂. The coupling recesses 13a₁ and 13a₂ may be coupled to first elastic members 430 of the first cover member 400 to be described later.

The cap plate 14 is coupled to the case 13 to cover the electrode assembly. For example, the cap plate 14 may be coupled to the case 13 using laser welding, resistance welding, or supersonic welding. The cap plate 14 may be formed of the same material as the case 13. A safety vent may be located on the cap plate 14. When an inner pressure of the case 13 is equal to or greater than an allowance value, the safety vent ruptures to emit inner gas to the outside. The safety vent may be thinner than the cap plate 14.

The collecting terminals 11 and 12 include the positive terminal 11 and the negative terminal 12 which are coupled to and protrude from the cap plate 14. The positive terminal 11 and the negative terminal 12 are threaded to allow a bus bar to be coupled and fixed thereto. Terminal plates 11 b and 12b are coupled to upper regions 11 a and 12a of the positive terminal 11 and the negative terminal 12, respectively. The terminal plates 11 b and 12b may be nuts having a hexagonal column shape. The positive terminal 11 may be electrically connected through a collecting plate to the positive electrode plate of the electrode assembly and the negative terminal 12 may be electrically connected through a collecting plate to the negative electrode plate of the electrode assembly. The positive terminal 11 and the negative terminal 12 may be formed of aluminum (Al) and copper (Cu), respectively, but embodiments of the present invention are not limited thereto.

Referring to FIG. 3, the first cover member 400 covers first surfaces (that is, bottom surfaces) 13a, 23a, 33a, 43a, 53a, 63a, 73a, and 83a of the secondary batteries 10, 20, 30, 40, 50, 60, 70, and 80. The first elastic members 430 are located between the first cover member 400 and the respective first surfaces 13a, 23a, 33a, 43a, 53a, 63a, 73a, and 83a. The first elastic members 430 include coil springs 430a, 430b, 430c, 430d, 430e, 430f, 430g, and 430h (FIG. 5B) to correspond to the first surfaces 13a, 23a, 33a, 43a, 53a, 63a, 73a, and 83a. The first elastic member may be elastically compressible in the direction between the first cover member and the first surface of the secondary batteries. The first elastic member 430 may be a coil spring, but embodiments of the present invention are not limited thereto. In such embodiments, a separate first elastic member (e.g. a coil spring) may be provided for each of the secondary batteries. In other embodiments, the first elastic member may be a single integral member for all or some of the secondary batteries.

The first cover member 400 includes a first horizontal part 410 and a first sidewall part 420. The bottom surface of the first horizontal part 410 is substantially flat and may include a plurality of discharge holes 414 to discharge and introduce gas or water. The discharge holes 414 are surrounded by a plurality of sidewalls 411. The first sidewall part 420 extends in a first direction from edges of the first horizontal part 410 to second surfaces that are opposite to the first surfaces 13a, 23a, 33a, 43a, 53a, 63a, 73a, and 83a, that is, extends upward, and is perpendicular to the first horizontal part 410. The first sidewall part 420 includes sidewalls 421, 422, 423, and 424, which are perpendicular to the first horizontal part 410. The first horizontal part 410 may further include first vertical parts 412 that protrude in the first direction, so that the first vertical parts 412 can be fitted between the secondary batteries 10, 20, 30, 40, 50, 60, 70, and 80. The first vertical parts 412 may be located at a lower position than the first sidewall part 420, i.e., they may be recessed from the first sidewall part. The first vertical parts 412 contact the first surfaces 13a, 23a, 33a, 43a, 53a, 63a, 73a, and 83a of the secondary batteries 10, 20, 30, 40, 50, 60, 70, and 80, and the first sidewall part 420 surrounds the first surfaces 13a, 23a, 33a, 43a, 53a, 63a, 73a, and 83a, and side surfaces adjacent thereto. Accordingly, the first cover member 400 is coupled to the lower portions of the secondary batteries 10, 20, 30, 40, 50, 60, 70, and 80.

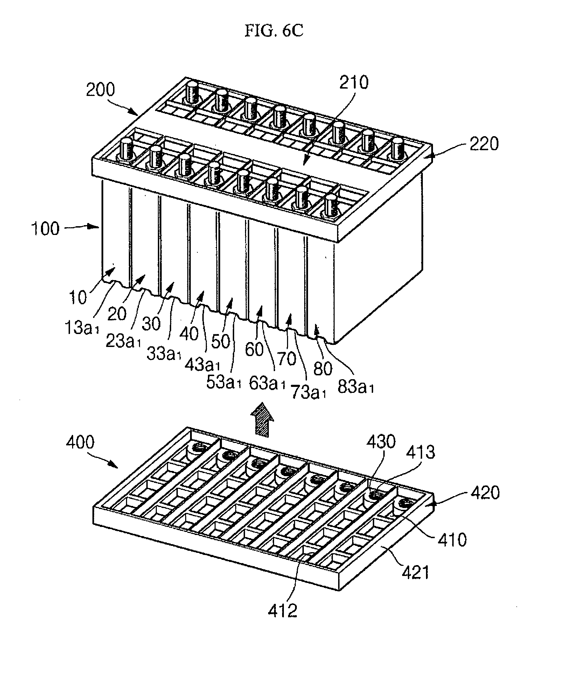

The first horizontal part 410 includes positioning recesses 413 coupled to the coil springs (also denoted by 430). The positioning recesses 413 include the positioning recesses 413a, 413b, 413c, 413d, 413e, 413f, 413g, and 413h to correspond to a plurality of coil springs 430a, 430b, 430c, 430d, 430e, 430f, 430g, and 430h. The positioning recesses 413 may be located on both side portions of the top surface of the first horizontal part 410, but embodiments of the present invention are not limited thereto. The lower portion of the coil spring 430 is coupled to the inner portion of the positioning recess 413, and the upper portion thereof protrudes out of the positioning recess 413. The upper portions of the coil springs 430 contact coupling recesses (refer to FIG. 6C) of the first surfaces 13a, 23a, 33a, 43a, 53a, 63a, 73a, and 83a to absorb shock or vibration applied from the outside of the secondary batteries 10, 20, 30, 40, 50, 60, 70, and 80, thereby improving the durability of the secondary batteries 10, 20, 30, 40, 50, 60, 70, and 80.

Referring to FIG. 4, the second cover member 200 includes through holes 214 through which collecting terminals 11, 21, 31, 41, 51, 61, 71, 81, 12, 22, 32, 42, 52, 62, 72, and 82 of the secondary batteries 10, 20, 30, 40, 50, 60, 70, and 80 constituting the secondary battery module 100 pass, and surrounds the second surfaces that are opposite to the first surfaces 13a, 23a, 33a, 43a, 53a, 63a, 73a, and 83a, that is, surrounds the top surfaces of the secondary batteries 10, 20, 30, 40, 50, 60, 70, and 80. The through holes 214 may have a circular shape and a polygonal shape such as a tetragonal shape, from a plan view, but embodiments of the present invention are not limited thereto. The second cover member 200 may be formed of one of aluminum (Al), copper (Cu), iron (Fe), stainless steel (SUS), a ceramic, a polymer material, and an equivalent thereof, but embodiments of the present invention are not limited thereto.

The second cover member 200 includes a second horizontal part 210 and a second sidewall part 220, wherein the through holes 214 are located in the second horizontal part 210. A top surface 211 of the second horizontal part 210 is flat and the second sidewall part 220 extends in a second direction extending from edges of the second horizontal part 210 to the first surfaces 13a, 23a, 33a, 43a, 53a, 63a, 73a, and 83a, that is, extends downward, and includes sidewalls 221, 222, 223, and 224, which are substantially perpendicular to the second horizontal part 210. The second horizontal part 210 may further include second vertical parts 212 that protrude in the second direction, so that the second vertical parts 212 can be fitted between neighboring secondary batteries 10, 20, 30, 40, 50, 60, 70, and 80. The second vertical parts 212 may be located at a higher position than the second sidewall part 220. Thus, the second vertical parts 212 contact the second surfaces of the secondary batteries 10, 20, 30, 40, 50, 60, 70, and 80, and the second sidewall part 220 surrounds the second surfaces and side surfaces adjacent to the second surfaces, so that the second cover member 200 is fixed to the upper portion of the secondary batteries 10, 20, 30, 40, 50, 60, 70, and 80. The second horizontal part 210 may further include horizontal members 213 that are perpendicular to the second vertical parts 212 and pass through the second vertical parts 212 and the second sidewall part 220.

A second elastic member 300 may be located between the second cover member 200 and the second surfaces of the secondary batteries 10, 20, 30, 40, 50, 60, 70, and 80. The second elastic member 300 may be a leaf spring, but embodiments of the present invention are not limited thereto. The second elastic member may be elastically compressible in the direction between the second cover member and the second surface of the secondary batteries. A separate second elastic member may be provided for each of the secondary batteries. In other embodiments, the second elastic member may be a single integral member for all or some of the secondary batteries. The second elastic member 300 (hereinafter, referred to as a leaf spring) extends in an array direction of the secondary batteries 10, 20, 30, 40, 50, 60, 70, and 80, and absorbs shock and vibration applied from the outside of the second cover member 200 to protect the secondary batteries 10, 20, 30, 40, 50, 60, 70, and 80, thereby improving the durability thereof. The leaf spring 300 may be formed of a copper alloy having high elasticity, such as one of phosphorus bronze, beryllium copper, and brass, but embodiments of the present invention are not limited thereto.

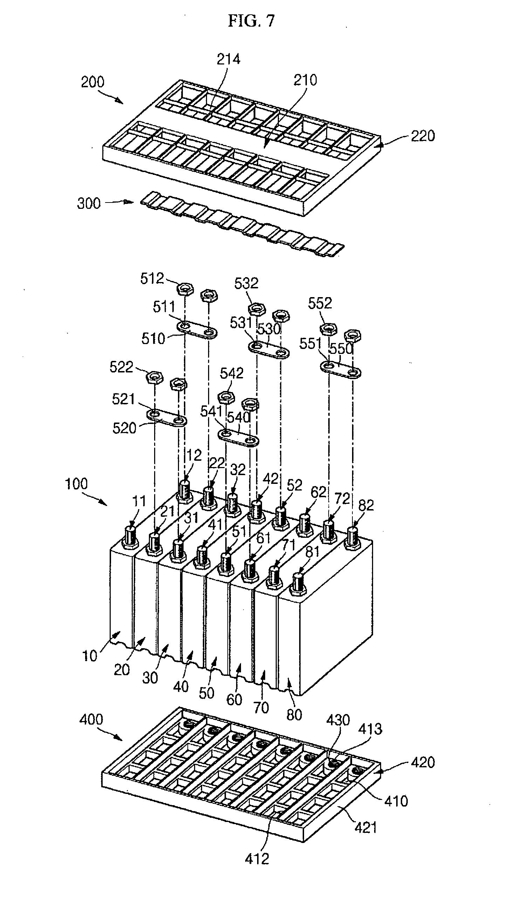

The collecting terminals of neighboring ones of the secondary batteries 10, 20, 30, 40, 50, 60, 70, and 80 may be connected to each another through bus bars. For example, one of the bus bars, denoted by 510 in FIG. 7, may electrically connect the collecting terminal 12 of the secondary battery 10 to the collecting terminal 22 of the secondary battery 20 adjacent thereto. The leaf spring 300 contacts the top surface of the bus bar 510 and the bottom surface of the second horizontal part 210 of the second cover member 200, which will be described later with reference to FIG. 7.

According to the embodiment, since the top and bottom surfaces of the batteries are coupled to the flat first and second cover members, the flatness, durability and assembly quality of the secondary batteries can be ensured, and further, swelling due to inner pressure increased during the charging and discharging of the secondary batteries is prevented more efficiently.

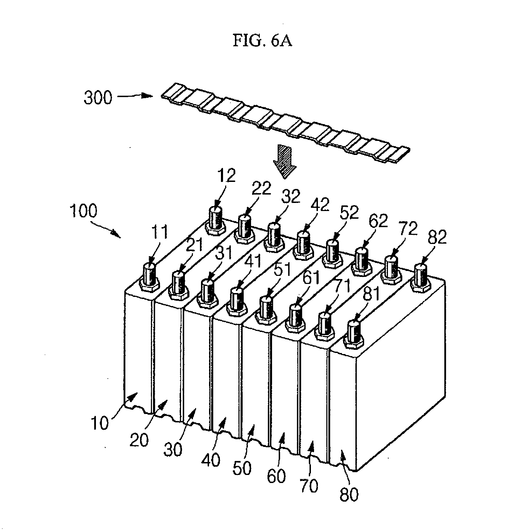

FIGS. 6A through 6C are perspective views illustrating a process of assembling a battery pack with a secondary battery module according to an embodiment.

Referring to FIG. 6A, the leaf spring 300 is coupled to the secondary battery module 100 in which the secondary batteries 10, 20, 30, 40, 50, 60, 70, and 80 are parallel and electrically connected to one another. That is, the leaf spring 300 extends in the array direction of the secondary batteries 10, 20, 30, 40, 50, 60, 70, and 80 is located between a group of the positive terminals 11, 21, 31, 41, 51, 61, 71, and 81, and a group of the negative terminals 12, 22, 32, 42, 52, 62, 72, and 82, which are located on the second surfaces (top surfaces) of the secondary batteries 10, 20, 30, 40, 50, 60, 70, and 80.

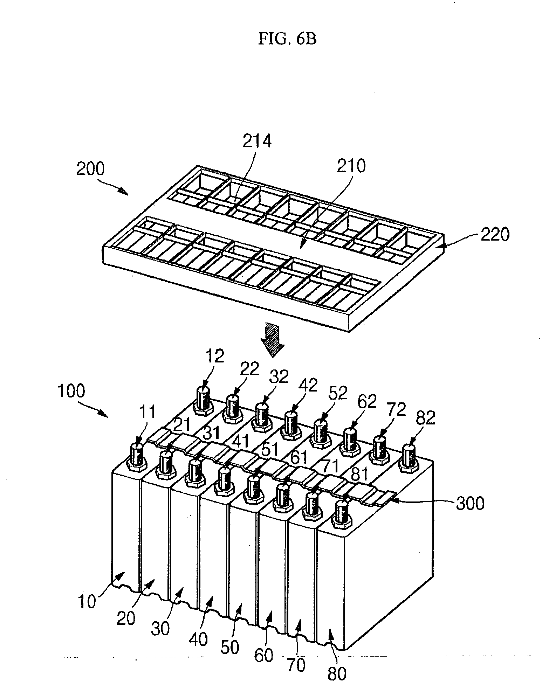

Referring to FIG. 6B, the cover member 200 is coupled to both the secondary battery module 100 and the leaf spring 300. That is, the second horizontal part 210 of the cover member 200 closely contacts the leaf spring 300, and the positive terminals 11, 21, 31, 41, 51, 61, 71, and 81, and the negative terminals 12, 22, 32, 42, 52, 62, 72, and 82 pass through the through holes 214, and the second sidewall part 220 surrounds the upper edges of the secondary battery module 100.

Referring to FIG. 6C, the first cover member 400 is coupled to the lower portion of the secondary battery module 100. At this point, the coil springs 430a, 430b, 430c, 430d, 430e, 430f, 430g, and 430h are located in the positioning recesses 413a, 413b, 413c, 413d, 413e, 413f, 413g, and 413h of the first cover member 400, and are coupled to coupling recesses 13a₁, 23a₁, 33a₁, 43a₁, 53a₁, 63a₁, 73a₁, and 83a₁ formed in the first surfaces 13a, 23a, 33a, 43a, 53a, 63a, 73a, and 83a.

FIG. 7 is an exploded perspective view illustrating a battery pack according to an embodiment.

Referring to FIG. 7, a battery pack according to an embodiment includes a secondary battery module 100, a first cover member 400, and a second cover member 200. Since the first and second cover members 400 and 200 of the battery pack of FIG. 7 are the same as the first and second cover members 400 and 200 of the battery pack of FIGS. 1 through 5B, the battery pack of FIG. 7 according to the current embodiment will now be described with respect to the secondary battery module 100.

The secondary battery module 100 is formed by placing the secondary batteries 10, 20, 30, 40, 50, 60, 70, and 80 parallel to one another, and electrically connecting the secondary batteries 10, 20, 30, 40, 50, 60, 70, and 80 to one another through bus bars 510, 520, 530, 540, and 550. The secondary batteries 10, 20, 30, 40, 50, 60, 70, and 80 may be connected to one another in series and/or in parallel through the bus bars 510, 520, 530, 540, and 550, which are electrically conductive. The bus bars 510, 520, 530, 540, and 550 include through holes 511, 521, 531, 541, and 551 at both sides thereof, respectively. The through holes 511, 521, 531, 541, and 551 are coupled to the positive terminals 11, 21, 31, 41, 51, 61, 71, and 81 and the negative terminals 12, 22, 32, 42, 52, 62, 72, and 82 of the secondary batteries 10, 20, 30, 40, 50, 60, 70, and 80. The second surfaces of the secondary batteries 10, 20, 30, 40, 50, 60, 70, and 80 are coupled to the leaf spring 300 extending in the array direction thereof. The positive terminals 11, 21, 31, 41, 51, 81, 71, and 81 and the negative terminals 12, 22, 32, 42, 52, 62, 72, and 82 couple to nuts 512, 522, 532, 542, and 552, after passing through the bus bars 512, 522, 532, 542, and 552. Although not shown, alternatively, the positive terminals 11, 21, 31, 41, 51, 61, 71, and 81 and the negative terminals 12, 22, 32, 42, 52, 62, 72, and 82 may be riveted to the bus bars 510, 520, 530, 540, and 550, after passing through the bus bars 510, 520, 530, 540, and 550. The top and bottom surfaces of the secondary battery module 100 configured as described above are coupled to the first and second cover members 200 and 400, respectively. The bus bars 510, 520, 530, 540, and 550 may be formed of one of stainless steel, aluminum, an aluminum alloy, copper, a copper alloy, and an equivalent thereof, but embodiments of the present invention are not limited thereto.

Thus, according to one embodiment, the leaf spring is located between the top surfaces of the secondary batteries and the second cover member, and the coil spring is located between the bottom surface of each secondary battery and the first cover member, to absorb vibration, thereby improving the durability of the battery pack against external shock and vibration.

According to such an embodiment, since the top and bottom surfaces of the batteries are coupled to the flat first and second cover members, the flatness, durability and assembly quality of the secondary batteries can be ensured, and further, swelling due to inner pressure increased during the charging and discharging of the secondary batteries is prevented more efficiently.

As will be appreciated, the secondary battery can be coupled to a motor for propelling an electric vehicle or a hybrid electric vehicle. In doing so, the vehicle will be able to operate on less or no traditional fuel like gasoline, and therefore, be more environmentally friendly.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present disclosure as set forth in the following claims.

## Claims

1. A battery pack comprising:
a plurality of secondary batteries (10, 20, 30, 40, 50, 60, 70, 80), each of the secondary batteries including: an electrode assembly; a case (13) accommodating the electrode assembly; and a collecting terminal (11, 12) electrically connected to the electrode assembly and protruding from the case;
a first cover member (400) on a first surface of each of the secondary batteries;
a first elastic member (430) located between the first cover member and the first surface of each of the secondary batteries;
a second cover member (200) that covers a second surface of each of the secondary batteries; and
a second elastic member (300) located between the second cover member (200) and the second surface of each of the secondary batteries;
**characterised in that** the second elastic member (300) comprises a leaf spring.

2. A battery pack according to claim 1, wherein a separate first elastic member is provided for each of the secondary batteries.

3. A battery pack according to claim 1 or 2, wherein each first elastic member (430) comprises a coil spring.

4. A battery pack according to any one of claims 1 to 3, wherein the first cover member (400) comprises:
a first part (410) having a plurality of discharge holes (414); and
a first sidewall part (420) extending in a first direction from an edge of the first part.

5. A battery pack according to claim 4, wherein the first part (410) comprises a positioning recess (413) that accommodates each first elastic member.

6. A battery pack according to claim 4 or 5, wherein the first part (410) comprises a plurality of first protruding parts (412) that protrude in the first direction such that a first protruding part (412) is located between adjacent ones of the secondary batteries.

7. A battery pack according to claim 6, wherein each first protruding part (412) is recessed from the first sidewall part (420).

8. A battery pack according to any one of claims 1 to 7, wherein each of the secondary batteries has at least one coupling recess (13a₁, 13a₂) in the first surface.

9. A battery pack according to claim 8, wherein the first elastic member (430) is located in the at least one coupling recess.

10. A battery pack according to any one of claims 1 to 9, wherein the second cover member (200) has a through hole (214) through which each collecting terminal (11, 12) passes, and the second surface is opposite to the first surface.

11. A battery pack according to claim 10, wherein collecting terminals of adjacent ones of the secondary batteries are electrically connected to each other through a bus bar.

12. A battery pack according to claim 11, wherein the bus bar is located between the second surface of the secondary batteries and the second elastic member:

## Patentansprüche

1. Batterieteil, das aufweist:
eine Vielzahl von Sekundärbatterien (10, 20, 30, 40, 50, 60, 70, 80), wobei eine jede der Sekundärbatterien umfasst: eine Elektrodenanordnung; ein Gehäuse (13), das die Elektrodenanordnung aufnimmt; und eine Sammelanschlussklemme (11, 12), die elektrisch mit der Elektrodenanordnung verbunden ist und aus dem Gehäuse vorsteht;
ein erstes Abdeckelement (400) auf einer ersten Fläche einer jeden der Sekundärbatterien;
ein erstes elastisches Element (430), das zwischen dem ersten Abdeckelement und der ersten Fläche einer jeden der Sekundärbatterien angeordnet ist;
ein zweites Abdeckelement (200), das eine zweite Fläche einer jeden der Sekundärbatterien bedeckt; und
ein zweites elastisches Element (300), das zwischen dem zweiten Abdeckelement (200) und der zweiten Fläche einer jeden der Sekundärbatterien angeordnet ist;
**dadurch gekennzeichnet, dass** das zweite elastische Element (300) eine Blattfeder aufweist.

2. Batterieteil nach Anspruch 1, bei dem ein separates erstes elastisches Element für eine jede der Sekundärbatterien vorhanden ist.

3. Batterieteil nach Anspruch 1 oder 2, bei dem ein jedes erstes elastisches Element (430) eine Schraubenfeder aufweist.

4. Batterieteil nach einem der Ansprüche 1 bis 3, bei dem das erste Abdeckelement (400) aufweist:
ein erstes Teil (410) mit einer Vielzahl von Austrittslöchern (414); und
ein erstes Seitenwandteil (420), das sich in einer ersten Richtung von einem Rand des ersten Teils aus erstreckt.

5. Batterieteil nach Anspruch 4, bei dem das erste Teil (410) eine Positionierungsaussparung (413) aufweist, die ein jedes erstes elastisches Element aufnimmt.

6. Batterieteil nach Anspruch 4 oder 5, bei dem das erste Teil (410) eine Vielzahl von ersten vorstehenden Teilen (412) aufweist, die in der ersten Richtung so vorstehen, dass ein erstes vorstehendes Teil (412) zwischen benachbarten der Sekundärbatterien angeordnet ist.

7. Batterieteil nach Anspruch 6, bei dem ein jedes erstes vorstehendes Teil (412) aus dem ersten Seitenwandteil (420) ausgespart ist.

8. Batterieteil nach einem der Ansprüche 1 bis 7, bei dem eine jede der Sekundärbatterien mindestens eine Verbindungsaussparung (13a₁, 13a₂) in der ersten Fläche aufweist.

9. Batterieteil nach Anspruch 8, bei dem das erste elastische Element (430) in der mindestens einen Verbindungsaussparung angeordnet ist.

10. Batterieteil nach einem der Ansprüche 1 bis 9, bei dem das zweite Abdeckelement (200) ein Durchgangsloch (214) aufweist, durch das eine jede Sammelanschlussklemme (11, 12) gelangt, und wobei die zweite Fläche der ersten Fläche entgegengesetzt ist.

11. Batterieteil nach Anspruch 10, bei dem die Sammelanschlussklemmen von benachbarten der Sekundärbatterien elektrisch miteinander mittels einer Sammelschiene verbunden sind.

12. Batterieteil nach Anspruch 11, bei dem die Sammelschiene zwischen der zweiten Fläche der Sekundärbatterien und dem zweiten elastischen Element angeordnet ist.

## Revendications

1. Bloc de batterie, comprenant :
plusieurs batteries secondaires (10, 20, 30, 40, 50, 60, 70, 80), chacune des batteries secondaires englobant un assemblage d'électrode ; un boîtier (13), recevant l'assemblage d'électrode ; et une borne de collecte (11, 12), connectée électriquement à l'assemblage d'électrode et débordant du boîtier ;
un premier élément de couvercle (400) sur une première surface de chacune des batteries secondaires ;
un premier élément élastique (430), agencé entre le premier élément de couvercle et la première surface de chacune des batteries secondaires ;
un deuxième élément de couvercle (200), recouvrant une deuxième surface de chacune des batteries secondaires ; et
un deuxième élément élastique (300), agencé entre le deuxième élément de couvercle (200) et la deuxième surface de chacune des batteries secondaires ;
**caractérisé en ce que** le deuxième élément élastique (300) comprend un ressort à lames.

2. Bloc de batterie selon la revendication 1, dans lequel un premier élément élastique séparé est prévu pour chacune des batteries secondaires.

3. Bloc de batterie selon les revendications 1 ou 2, dans lequel chaque premier élément élastique (430) comprend un ressort hélicoïdal.

4. Bloc de batterie selon l'une quelconque des revendications 1 à 3, dans lequel le premier élément de couvercle (400) comprend :
une première partie (410), comprenant plusieurs trous de décharge (414) ; et
une première partie de paroi latérale (420), s'étendant dans une première direction à partir d'un bord de la première partie.

5. Bloc de batterie selon la revendication 4, dans lequel la première partie (410) comprend un évidement de positionnement (413) recevant chaque premier élément élastique.

6. Bloc de batterie selon les revendications 4 ou 5, dans lequel la première partie (410) comprend plusieurs premières parties en saillie (412), débordant dans la première direction, de sorte qu'une première partie en saillie (412) est agencée entre des batteries adjacentes des batteries secondaires.

7. Bloc de batterie selon la revendication 6, dans lequel chaque première partie en saillie (412) est évidée par rapport à la première partie de paroi latérale (420).

8. Bloc de batterie selon l'une quelconque des revendications 1 à 7, dans lequel chacune des batteries secondaires comporte au moins un évidement d'accouplement (13a₁, 13a₂) dans la première surface.

9. Bloc de batterie selon la revendication 8, dans lequel le premier élément élastique (430) est agencé dans le au moins un évidement d'accouplement.

10. Bloc de batterie selon l'une quelconque des revendications 1 à 9, dans lequel le deuxième élément de couvercle (200) comporte un trou de passage (214) à travers lequel passe chaque borne de collecte (11, 12), la deuxième surface étant opposée à la première surface.

11. Bloc de batterie selon la revendication 10, dans lequel les bornes de collecte de batteries adjacentes des batteries secondaires sont connectées électriquement les unes aux autres par l'intermédiaire d'une barre omnibus.

12. Bloc de batterie selon la revendication 11, dans lequel la barre omnibus est agencée entre la deuxième surface des batteries secondaires et le deuxième élément élastique.
